# EUROPÄISCHE PATENTSCHRIFT

(11) **EP 2 809 528 B1**
(45) Veröffentlichungstag und Bekanntmachung des Hinweises auf die Patenterteilung: **15.03.2017**
(21) Anmeldenummer: 13700080.8
(22) Anmeldetag: 08.01.2013
(51) Int. Cl.: B60C 13/00

(54) **FAHRZEUGREIFEN**
VEHICLE TIRE
PNEU DE VÉHICULE

(30) Priorität: 02.02.2012 DE 102012100860
(43) Veröffentlichungstag der Anmeldung: 10.12.2014
(73) Patentinhaber: Continental Reifen Deutschland GmbH, 30165 Hannover (DE)
(72) Erfinder: METZ, Markus, 31535 Neustadt (DE)
(74) Vertreter: Finger, Karsten
(86) Internationale Anmeldenummer: PCT/EP2013/050171
(87) Internationale Veröffentlichungsnummer: WO 2013/113526

(56) Entgegenhaltungen:
- EP-A2- 0 751 014
- US-A- 5 303 758
- US-A1- 2004 003 881
- US-A1- 2010 000 649

## Beschreibung

Die Erfindung betrifft ein Polymerprodukt, wobei zumindest eine Darstellung auf der äußeren Oberfläche des Polymerproduktes angeordnet ist und wobei diese Darstellung eine Schraffur enthält.

Polymerprodukte sind beispielsweise Kfz-Interieurteile wie Tür- und Seitenverkleidungen, wie Konsolenverkleidungen sowie Fahrzeugreifen. KFZ-Interieurteile weisen Werkstoffe wie PVC, PU, TPO auf.

Ein Polymerprodukt gemäß dem Oberbegriff ist aus der US 2004/0187997 A1 bekannt geworden. Die US 2004/0187997 A1 hat einen Fahrzeugreifen zum Gegenstand, der auf der Oberfläche seiner Seitenwand eine Darstellung aufweist, welche eine Struktur in Form eines Lichtbeugungsgitters aus Mikrofurchen bestimmter Anordnung aufweist.. Durch den Effekt der Lichtbeugung am Lichtbeugungsgitter ist zumindest eine andere Farbe als das Schwarz des Elastomers bzw. Kautschuks, aus dem die Seitenwand besteht, für das menschliche Auge zu sehen.

Aus der gattungsgemäßen US 2010/0000649 A1 ist es bekannt, auf der Reifenseitenwand eine erste Schraffur anzuordnen, welche bereichsweise von einer zweiten Schraffur, welche die erste Schraffur kreuzt, überlagert ist. Die Darstellungen sind sowohl auf der ersten als auch auf den sich kreuzenden Schraffurbereichen angeordnet. Aus der EP 0 751 014 A2 ist es bekannt, Schraffuren unterschiedlicher Höhen und/ oder Tiefen auf der Reifenseitenwand anzuordnen. Aus der US 2004/0003881 A1 ist es bekannt, Schraffuren spiralförmig auf der Reifenseitenwand anzuordnen. Aus der US 5,303,758 B ist es bekannt, auf der Reifenseitenwand wenigstens zwei sich überlagernde Schraffuren anzuordnen, welche von einer Dritten Schraffur überlagert sein kann.

Der Begriff "Darstellung" umfasst dabei Abbildungen, Firmennamen, Firmenlogos, Farbkennzeichnungen, Informationsdaten, Identifikationscodes, Schraffuren etc..

Der Begriff "Schraffur" umfasst dreidimensionale, regelmäßige, symmetrische Strukturen wie beispielsweise gerade und parallel zueinander angeordnete Stege, wie Punkteraster oder wie Gitterstrukturen aus sich kreuzenden Stegen.

Darstellungen auf Polymerprodukten, insbesondere auf Interieurteilen und Reifenseitenwänden sollen eine hohe Fertigungsqualität aufweisen, eine hohe Qualitätsanmutung erzeugen sowie das Polymerprodukt gegenüber anderen Polymerprodukten optisch hervorheben. Dieses wird z.B. in Bezug auf den Fahrzeugreifen durch das Aufbringen von (farbigen) Folien auf die Reifenseitenwand erreicht. Die Folien werden üblicherweise auch "Vulkanetten" genannt. Das Aufbringen dieser Folien ist jedoch aufwändig und teuer.

Daher ist man bestrebt, die Darstellungen kostengünstig und ohne gesonderte Arbeitsschritte auf dem Polymerprodukt anordnen zu können.

Im Hinblick auf den nächstliegenden Stand der Technik ist es die Aufgabe der Erfindung, ein kostengünstiges Polymerprodukt zur Verfügung zu stellen, das auf seiner äußeren Oberfläche eine Darstellung aufweist, die dem Polymerprodukt eine hochqualitative Anmutung und eine hohe Fertigungsqualität verleiht.

Gelöst wird die Aufgabe, indem die Schraffur zur Erzeugung einer fotorealistischen Darstellung mit einem Relief dieser Darstellung kombiniert ist, dass das Relief eine Tiefenkarte der Darstellung ist, die vorzugsweise auf Basis von Grauwerten eines Fotos erzeugt ist und die bis zu 256 Tiefenabstufungen aufweist, derart, dass das Relief die Aussparungen der Schraffur je nach Grauwert in unterschiedlichen Höhen ausfüllt.

Es hat sich überraschenderweise gezeigt, dass die Kombination von einer Schraffur mit einem Relief der abzubildenden Darstellung zu einer fotorealistischen Darstellung führt, die der eines monochromen Fotos entspricht. Das Relief lässt sich als eine Tiefenkarte der Darstellung beschreiben, die z.B. auf Basis von Grauwerten (schwarz bis weiß) eines Fotos erzeugt ist und bis zu 256 Tiefenabstufungen aufweist. Das Relief füllt die Aussparungen der Schraffur je nach Grauwert in unterschiedlichen Höhen aus. Je stärker die Aussparung gefüllt ist, desto heller erscheint die Darstellung an dieser Stelle. Ist die Aussparung nicht ausgefüllt, erscheint diese schwarz. Ist die Aussparung komplett ausgefüllt, erscheint diese quasi weiß. Durch eine Abstufung von beispielsweise bis zu 256 Füllstufen der Aussparungen ist eine sehr detaillierte, fotorealistische Darstellung erhalten, die der eines monochromen Fotos entspricht. Die reliefartige Qualität einer dreidimensionalen Darstellung ist durch die überlagernde Schraffur deutlich übertroffen.

Die Darstellung kann dabei über die Oberfläche des Polymerproduktes hinausragen. Die Darstellung kann beispielsweise auch in die Oberfläche des Polymerproduktes integriert sein, derart, dass die Oberfläche des Polymerproduktes mit der Oberfläche der Schraffur fluchtet und derart nicht aus der Oberfläche des Polymerproduktes hervorsteht.

Zweckmäßig ist es, wenn die maximale Höhe des Reliefs der maximalen Höhe der Schraffur entspricht. Vorzugsweise beträgt die maximale Höhe des Reliefs 95% der maximalen Höhe der Schraffur.

Vorteilhaft ist es, wenn die Schraffur aus parallel zueinander und vorzugsweise gerade verlaufenden Stegen besteht oder wenn die Schraffur ein Gitter aus sich kreuzenden Stegen in Form eines Netzes ist oder wenn die Schraffur aus einem Punkteraster besteht.

Dabei ist es vorteilhaft, wenn die Stege der Schraffur - im Querschnitt betrachtet - die Form von in etwa gleichseitigen oder gleichschenkligen Dreiecken aufweisen, wobei die Basis der Dreiecke parallel zur äußeren Oberfläche der Seitenwand ausgerichtet ist und auf dieser aufliegen und wobei sich die Eckpunkte zweier benachbarter Dreiecke berühren. Diese Ausführung der Schraffur hat sich als besonders geeignet zur Erzielung der fotorealistischen Darstellung gezeigt.

Es ist zweckmäßig, wenn alle Stege, die Elemente des Gitters oder alle Punkte einer Schraffur die gleiche Höhe von 0,01 mm bis 3,0 mm, vorzugsweise von 0,25 mm bis 1,0 mm aufweisen. Die Höhe bemisst sich vom Schraffurgrund bis zur Schraffurspitze. Für Interieurteile und Reifenseitenwände sind beste Abbildungsqualitäten erreicht.

Es ist zweckmäßig, wenn benachbarte Stege, wenn benachbarte Elemente des Gitters oder wenn benachbarte Punkte einer Schraffur eine Beabstandung von 0,01 mm bis 3,0 mm, vorzugsweise von 0,25 mm bis 1,0 mm aufweisen. Für Interieurteile und Reifenseitenwände sind beste Abbildungsqualitäten erreicht.

Vorteilhaft ist es, wenn die Schraffur großflächiger als das diese Schraffur überlagernde Relief ist, wodurch sich die Abbildung des Reliefs für das menschliche Auge stärker gegenüber der übrigen Seitenwand hervorhebt.

Weitere Merkmale, Vorteile und Einzelheiten der Erfindung werden anhand der Zeichnungen, die schematische Ausführungsbeispiele darstellen, näher beschrieben. Dabei zeigt die
Fig. 1 eine hälftige Ansicht eines Fahrzeugreifens mit einer fotorealistischen Darstellung auf der Seitenwand;
Fig. 2 einen Radialschnitt entlang A-A durch die fotorealistische Darstellung des Fahrzeugreifens der Fig.1;
Fig. 3 eine erhaltene Darstellung, hier Blüte;
Fig. 4 dreidimensionale Ansichten der Schraffur, des Reliefs und der Überlagerung von Schraffur und Relief;
Fig. 5 zeigt Querschnitte durch die Schraffur, durch das Relief und durch die Überlagerung von Schraffur und Relief der Fig. 4.

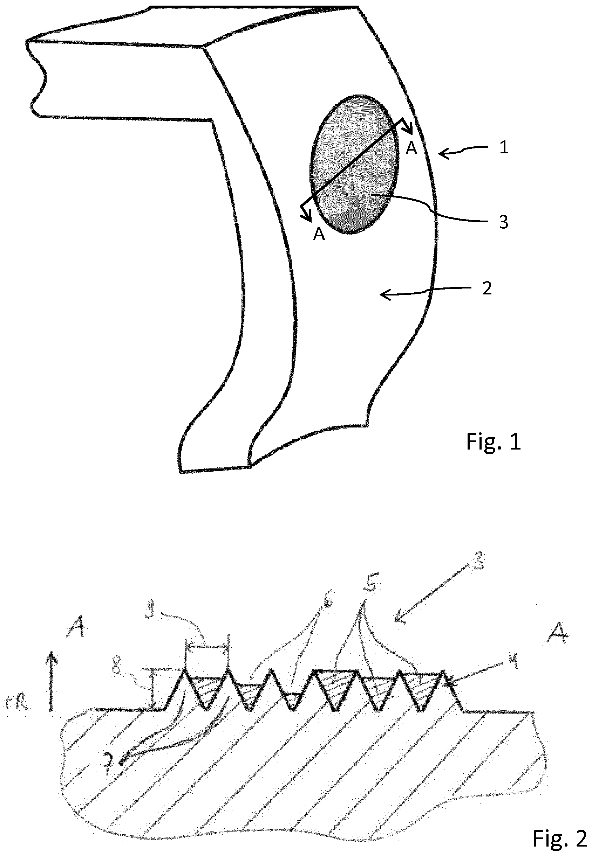

Die **Fig. 1** zeigt eine hälftige Ansicht eines Fahrzeugreifens 1 mit einer Seitenwand 2, wobei die Seitenwand 2 eine fotorealistische Darstellung 3 aufweist.

Der Radialschnitt der **Fig. 2**, welcher entlang der Schnittlinie A-A durch die fotorealistische Darstellung 3 des Fahrzeugreifens 1 der Fig.1 geführt ist, zeigt schematisch das Prinzip, wie die fotorealistische Darstellung 3, welche der eines monochromen Fotos entspricht, durch eine Schraffur 4 in Kombination bzw. in Überlagerung mit einem Relief 5 der Darstellung erhalten ist. Die Schraffur 4 und das Relief 5 sind gegenüber der Oberfläche der Seitenwand 2 erhöht angeordnet. Das Relief 5 füllt die Aussparungen 6 der Schraffur 4 in unterschiedlichen Höhen aus. Die Höhe der Füllung bestimmt den erhaltenen Grauwert. Eine vollständige Füllung ergibt einen quasi weißen Farbton. Ist die Aussparung 6 nicht gefüllt, ergibt dieses einen schwarzen Farbton. Die Schraffur 4 besteht aus parallel zueinander und vorzugsweise gerade verlaufenden Stegen 7. Die Stege 7 der Schraffur 4 weisen im Querschnitt in etwa die Form von gleichschenkligen Dreiecken auf, wobei die Basis der Dreiecke parallel zur äußeren Oberfläche der Seitenwand 2 ausgerichtet ist und auf dieser aufliegt, so dass die Spitze eines Dreiecks in radialer Richtung (rR) ausgerichtet ist. Die Eckpunkte der Basis zweier benachbarter Dreiecke berühren sich. Alle Stege 7 der Schraffur 4 weisen die gleiche Höhe 8 von 0,5 mm auf. Beachbarte Stege 7 weisen eine Beabstandung 9 von 0,5 mm auf.

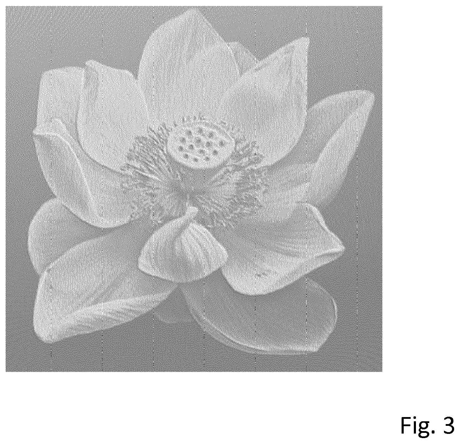

Die **Fig. 3** zeigt eine durch die Überlagerung von Relief und Schraffur erhaltene Darstellung (CAD), die auf der Oberfläche eines Elastomerproduktes angeordnet ist. Die Darstellung zeigt eine Blüte in monochromer Fotoqualität. Diese kann beispielsweise auf der Oberfläche eines Interieurteiles angeordnet sein.

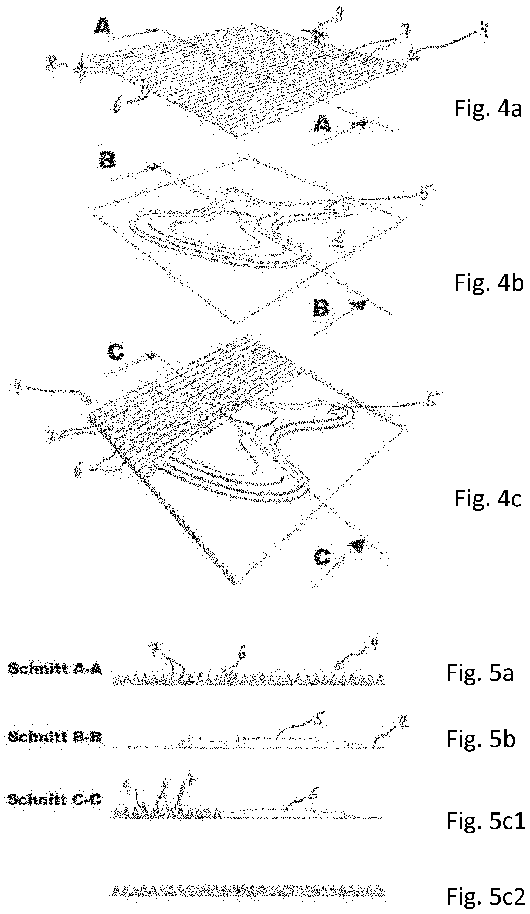

Die **Fig. 4** zeigt schematische dreidimensionale Ansichten der Schraffur (in Fig. 4a), des Reliefs (in Fig. 4b) und der Überlagerung von Schraffur und Relief (in Fig. 4c). Die Schraffur 4 der Fig. 4a besteht aus parallel zueinander und vorzugsweise gerade verlaufenden Stegen 7. Die Stege 7 der Schraffur 4 weisen im Querschnitt in etwa die Form von gleichschenkligen Dreiecken auf. Die Eckpunkte der Basis zweier benachbarter Dreiecke berühren sich. Alle Stege 7 der Schraffur 4 weisen die gleiche Höhe 8 von 0,5 mm auf. Beachbarte Stege 7 weisen eine Beabstandung 9 von 0,5 mm auf. Zwischen den Stegen 7 sind durch die Stege bedingte Aussparungen 6 angeordnet.

Das Relief 5 der Fig. 4b weist unterschiedliche Höhenebenen auf, die auf die Seitenwand 2 erhöht aufgebracht sind.

In der Fig. 4c ist die Überlagerung von Schraffur 4 und Relief 5 zur Erzeugung einer fotorealistischen Darstellung, welche der eines monochromen Fotos entspricht, dargestellt. Die Aussparungen 6 der Schraffur 4 sind durch die Überlagerung des Reliefs 5 in unterschiedlichen Füllhöhen ausgefüllt, wodurch verschiedene Grautöne erzeugt sind. Die Überlagerung ist zur besseren Erkennbarkeit des Prinzips nur hälftig dargestellt. Die andere Hälfte zeigt das Relief 5 ohne Überlagerung der Schraffur 4.

Die **Fig. 5** zeigt Querschnitte durch die Schraffur (Fig. 5a), durch das Relief (Fig. 5b) und durch die Überlagerung von Schraffur und Relief (Fig. 5c) der Fig. 4.

Die Fig. 5a zeigt einen Querschnitt durch die in Fig. 4a beschriebene Schraffur. Die Fig. 5b zeigt die verschiedenen Höhenebenen des auf die Seitenwand 2 erhöht aufgebrachten Reliefs 5 der Fig. 4b. Die Fig. 5c zeigt die Überlagerung von Schraffur 4 und Relief 5, wobei das Relief 5 die Aussparungen 6 der Schraffur 4 in unterschiedlichen Höhenniveaus ausfüllt, wodurch bestimmte Grautöne erzeugt werden. In der Fig. 5c1 ist die Schraffur 4 zum besseren Verständnis des Überlagerungsprinzips erkennbar dargestellt, während in Fig. 5c2 die vollständige Vereinigung von Schraffur 4 und Relief 5 gezeigt ist.

### Bezugszeichenliste

### (Teil der Beschreibung)

- 1: Fahrzeugreifen
- 2: Seitenwand
- 3: fotorealistische Darstellung
- 4: Schraffur
- 5: Relief
- 6: Aussparung der Schraffur
- 7: Steg
- 8: Höhe der Schraffur
- 9: Beabstandung zweier benachbarter Stege

- rR: radiale Richtung

## Patentansprüche

1. Polymerprodukt, vorzugsweise ein Fahrzeugreifen (1) mit Seitenwänden (2), wobei zumindest eine Darstellung (3) auf der äußeren Oberfläche des Polymerproduktes (2) angeordnet ist, wobei diese Darstellung (3) eine Schraffur (4) enthält, **dadurch gekennzeichnet, dass** die Schraffur (4) zur Erzeugung einer fotorealistischen Darstellung (3) mit einem Relief (5) dieser Darstellung kombiniert ist, dass das Relief eine Tiefenkarte der Darstellung ist, die vorzugsweise auf Basis von Grauwerten eines Fotos erzeugt ist und die bis zu 256 Tiefenabstufungen aufweist, derart, dass das Relief die Aussparungen der Schraffur je nach Grauwert in unterschiedlichen Höhen ausfüllt.

2. Polymerprodukt nach Anspruch 1,
**dadurch gekennzeichnet, dass** die maximale Höhe des Reliefs der maximalen Höhe der Schraffur (8) entspricht.

3. Polymerprodukt nach Anspruch 1 oder 2, **dadurch gekennzeichnet, dass** die Schraffur (4) aus parallel zueinander und vorzugsweise gerade verlaufenden Stegen (7) besteht oder dass die Schraffur (4) ein Gitter in Form eines Netzes ist oder dass die Schraffur (4) aus einem Punkteraster besteht.

4. Polymerprodukt nach einem oder mehreren der vorangehenden Ansprüche, **dadurch gekennzeichnet, dass** die Stege (7) der Schraffur (4) - im Querschnitt betrachtet - die Form von in etwa gleichseitigen oder gleichschenkligen Dreiecken aufweisen, wobei die Basis der Dreiecke parallel zur äußeren Oberfläche der Seitenwand (2) ausgerichtet ist und sich die Eckpunkte zweier benachbarter Dreiecke berühren.

5. Polymerprodukt nach Anspruch 3, **dadurch gekennzeichnet, dass** alle Stege (7), die Elemente des Gitters oder alle Punkte einer Schraffur (4) die gleiche Höhe (8) von 0,01 mm bis 3,0 mm, vorzugsweise von 0,25 mm bis 1,0 mm aufweisen.

6. Polymerprodukt nach Anspruch 3, **dadurch gekennzeichnet, dass** benachbarte Stege (7), benachbarte Elemente des Gitters oder benachbarte Punkte einer Schraffur (4) eine Beabstandung (9) von 0,01 mm bis 3,0 mm, vorzugsweise von 0,25 mm bis 1,0 mm aufweisen.

7. Polymerprodukt nach einem oder mehreren vorangehenden Ansprüchen, **dadurch gekennzeichnet, dass** dieses ein Interieurteil eines Kraftfahrzeuges oder ein Fahrzeugreifen ist, welcher die Darstellung auf zumindest einer Seitenwand aufweist.

## Claims

1. Polymer product, preferably a vehicle tyre (1) having sidewalls (2), at least one image (3) being arranged on the outer surface of the polymer product (2), the said image (3) comprising a hatched portion (4), **characterized in that** the hatched portion (4) is combined with a relief (5) of the said image in order to produce a photorealistic image (3), **in that** the relief is a depth map of the image, which depth map is preferably produced on the basis of grey values of a photo and which has up to 256 depth gradations, in such a way that the relief fills the recesses of the hatched portion to different levels depending on the grey value.

2. Polymer product according to Claim 1, **characterized in that** the maximum height of the relief corresponds to the maximum height of the hatched portion (8).

3. Polymer product according to Claim 1 or 2, **characterized in that** the hatched portion (4) consists of webs (7) which run parallel to one another and preferably in a straight line, or **in that** the hatched portion (4) is a lattice in the form of a grid, or **in that** the hatched portion (4) consists of a dot screen.

4. Polymer product according to one or more of the preceding claims, **characterized in that**, as viewed in cross section, the webs (7) of the hatched portion (4) have the shape of approximately equilateral or isosceles triangles, the base of the triangles being oriented parallel to the outer surface of the sidewall (2), and the corner points of two adjacent triangles being in contact.

5. Polymer product according to Claim 3, **characterized in that** all webs (7), the elements of the lattice or all points of the hatched portion (4) have the same height (8) of from 0.01 mm to 3.0 mm, preferably of from 0.25 mm to 1.0 mm.

6. Polymer product according to Claim 3, **characterized in that** adjacent webs (7), adjacent elements of the lattice or adjacent dots of a hatched portion (4) are at a spacing (9) of from 0.01 mm to 3.0 mm, preferably of from 0.25 mm to 1.0 mm.

7. Polymer product according to one or more of the preceding claims, **characterized in that** it is an interior part of a motor vehicle or a vehicle tyre which has the image on at least one sidewall.

## Revendications

1. Produit polymère, de préférence pneumatique de véhicule (1) avec des parois latérales (2), dans lequel au moins une représentation (3) est disposée sur la surface extérieure du produit polymère (2), dans lequel cette représentation (3) contient une hachure (4), **caractérisé en ce que** la hachure (4) est combinée avec un relief (5) de cette représentation pour produire une représentation photo-réaliste (3), **en ce que** le relief est une carte de profondeur de la représentation, qui est produite de préférence sur la base des valeurs de gris d'une photographie et qui présente jusqu'à 256 niveaux de profondeur, de telle manière que le relief remplisse les creux de la hachure à des hauteurs différentes selon la valeur de gris.

2. Produit polymère selon la revendication 1, **caractérisé en ce que** la hauteur maximale du relief correspond à la hauteur maximale (8) de la hachure.

3. Produit polymère selon la revendication 1 ou 2, **caractérisé en ce que** la hachure (4) se compose de nervures (7) orientées parallèlement l'une à l'autre et de préférence en ligne droite ou **en ce que** la hachure (4) est une grille en forme de filet ou **en ce que** la hachure (4) se compose d'une grille de points.

4. Produit polymère selon une ou plusieurs des revendications précédentes, **caractérisé en ce que** les nervures (7) de la hachure (4) - considérées en section transversale - présentent la forme de triangles équilatéraux ou isocèles, dans lequel la base des triangles est orientée parallèlement à la surface extérieure de la paroi latérale (2) et les sommets de deux triangles voisins se touchent.

5. Produit polymère selon la revendication 3, **caractérisé en ce que** toutes les nervures (7), les éléments de la grille ou tous les points d'une hachure (4) présentent la même hauteur (8) de 0,01 mm à 3,0 mm, de préférence de 0,25 mm à 1,0 mm.

6. Produit polymère selon la revendication 3, **caractérisé en ce que** des nervures voisines (7), des éléments voisins de la grille ou des points voisins d'une hachure (4) présentent un écartement (9) de 0,01 mm à 3,0 mm, de préférence de 0,25 mm à 1,0 mm.

7. Produit polymère selon une ou plusieurs des revendications précédentes, **caractérisé en ce que** celui-ci est une partie intérieure d'un véhicule automobile ou un pneumatique de véhicule, qui présente la représentation sur au moins une paroi latérale.
